Europäisches Patentamt

European Patent Office

Office européen des brevets

(11) Veröffentlichungsnummer: **0 504 646 A2**

## (12) EUROPÄISCHE PATENTANMELDUNG

(21) Anmeldenummer: **92103546.5**

(51) Int. Cl.5: **B65D 81/06**

(22) Anmeldetag: **02.03.92**

(30) Priorität: **18.03.91 DE 4108843**

(43) Veröffentlichungstag der Anmeldung:
**23.09.92 Patentblatt 92/39**

(84) Benannte Vertragsstaaten:
**CH DE FR GB IT LI**

(71) Anmelder: **Licentia Patent-Verwaltungs-GmbH**
**Theodor-Stern-Kai 1**
**W-6000 Frankfurt/Main 70(DE)**

(72) Erfinder: **Heins, Hans-Peter**
**Beethovenstrasse 29**
**W-2940 Wilhelmshaven(DE)**

(54) **Verpackungsbehälter.**

(57) Um ein stoßempfindliches Packgut (15) vor einer Zerstörung z. B. bei einem Sturz eines Verpackungsbehälters (1) während des Transports zu verhindern, sind in bekannter Weise Polsterschichten zwischen der Außenverpackung (3) und dem Packgut (15) angeordnet. Diese Polsterschichten bestehen vielfach aus Materialien, wie Styropor, die der Endkunde nicht selbst wieder verwenden kann. Daher behandelt dieser derartige Verpackungen meistens als Müll. Erfindungsgemäß wird dieser Nachteil dadurch umgangen, daß die Zwischenräume (21, 23, 25, 27) zwischen der Innenverpackung (5) und der Außenverpackung (3) durch Polsterschichten aus Papiervlies ausgefüllt sind, welches aus einem wiederverwertbaren und umweltfreundlichen Material hergestellt ist. Die aus Papiervlies bestehenden Polsterschichten (29) fangen die Stöße derart ab, daß eine Zerstörung des Packgutes (15) sicher vermieden wird. Nach dem Auspacken des Packgutes (15) aus dem Verpackungsbehälter (1) werden die Päckchen (30) mit den Papierhandtüchern (31) von der Innenverpackung (5) getrennt, wonach die Papierhandtücher (31) dann im Haushalt oder auch in der Industrie verwendet werden können.

Die Erfindung betrifft einen Verpackungsbehälter zur Aufnahme eines stoßempfindlichen oder leicht zerstörbaren Packgutes der im Oberbegriff des Patentanspruchs 1 angegebenen Art.

Bei der Endverpackung von Haushaltsgeräten finden in großem Umfang Verpackungsbehälter aus Pappe Verwendung, in denen zur Abstützung und Polsterung des Verpackungsgutes lose Polsterformteile aus Hartschaumstoff eingefügt sind. Da der Endverbraucher diese Verpackungen nicht wieder verwenden kann, werden sie als Müll behandelt. Hierdurch wird die Umwelt sehr belastet. Außerdem sind diese Verpackungen recht teuer, da die aus Pappe bestehenden Verpackungsbehälter und die aus Styropor bestehenden Polsterformteile meistens von getrennten Herstellern stammen und erst zu den Geräteherstellern hin transportiert werden müssen.

Weiterhin ist durch die Geschmackmusteranmeldung M 88 09 964.5 eine Geschenkkassette bekannt, die aus einem Karton mit einem Deckel besteht, wobei die Innenseiten des Deckels, des Kassettenbodens und der Kartonseitenwände mit einer Polsterschicht versehen sind. Die ausgewählten Geschenkartikel werden auf dem ebenfalls gepolsterten Einsatzteil angeordnet und befestigt. Die Auspolsterung des Kartons ist aber sehr mühsam, da mehrere Arbeitsgänge notwendig sind, um zuerst den Boden mit der Polsterschicht und dann die Seitenteile mit der Polsterschicht zu versehen. Da die Polsterschichten sowohl mit dem Boden als auch mit den Seitenteilen des Kartons fest verbunden sind, kann der Geschenkkarton auch nur als solcher benutzt werden. Dies bedeutet, daß diese Verpackung beim Endverbraucher als Müll behandelt wird und daher die Umwelt erheblich belastet.

Der Erfindung liegt die Aufgabe zugrunde, die bekannten Verpackungsbehälter für stoßempfindliche und leicht zerstörbare Packstücke aus Pappe und mit eingefügten Polsterschichten derart umzugestalten, daß sie zumindest aus umweltfreundlichen Materialien bestehen. Diese Aufgabe wird durch die im Patentanspruch 1 gekennzeichneten Merkmale gelöst.

Der erfindungsgemäße Verpackungsbehälter besteht nur noch aus Papier bzw. Pappe, von dem ein Teil noch weiter verwertet werden kann. So können die Polsterschichten aus den Papierhandtüchern sowohl in der Industrie als auch in dem Privathaushalten wiederverwendet werden. Die restlichen Teile des Verpackungsbehälters lassen sich ohne Abfall einem Recyclingprozeß zuführen.

Weitere vorteilhafte Ausgestaltungen sind den weiteren Unteransprüchen zu entnehmen.

Die Erfindung wird im folgenden anhand eines Ausführungsbeispiels näher beschrieben.

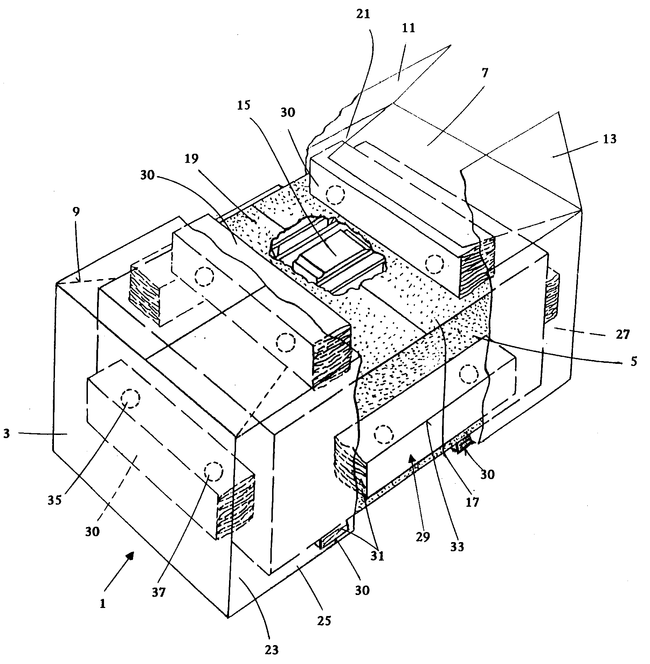

In der Figur ist ein Verpackungsbehälter 1 dargestellt, der in bekannter Weise zwei aus Pappe bestehende Einzelteile aufweist, zu denen eine Außenverpackung 3 und eine Innenverpackung 5 gehören. Die Außenverpackung 3 besteht aus einem Karton mit ansich bekannten aufklappbaren Deckeln 7, 9, 11, 13. Die Innenverpackung 5, in der ein stoßempfindliches oder leicht zerstörbares Packgut 15 angeordnet wird, hat einen ähnlichen Aufbau mit Deckeln 17, 19. Die Zwischenräume 21, 23, 25, 27 zwischen der Außen- 3 und der Innenverpackung 5 sind durch Polsterschichten 29 aus Papiervlies teilweise ganz ausgefüllt, welches aus einem wiederverwertbaren und umweltfreundlichen Material hergestellt ist. Diese aus Papiervlies bestehenden Polsterschichten 29 bilden einzelne Päckchen 30 aus gestapelten und gefalteten Papierhandtüchern 31, welche mittels eines Umschlagpapiers 33 zusammengehalten werden. Um ein Verrutschen dieser Päckchen 30 mit den Papierhandtüchern 31 beim Transport oder beim Sturz des Verpackungsbehälters zu verhindern, sind die Umschlagpapiere 33 für die Papierhandtücher 31 über punktförmige Klebestellen 35, 37 jeweils mit den Außenseiten der Innenverpackung 5 fest verbunden. Die Umschlagpapiere 33 lassen sich aber leicht von der Innenverpackung 5 lösen, wenn das stoßempfindliche Packgut 15 ausgepackt wird oder bereits ausgepackt ist. Bei diesem Trennvorgang bleibt das Päckchen 30 mit den Papierhandtüchern 31 und dem Umschlagpapier 33 noch unbeschädigt, derart, daß die Wiederverwendung der Papierhandtücher 31 auch für Papiervorratsautomaten geeignet ist.

Das in der Innenverpackung 5 befindliche Packgut 15 ist bei Stürzen des Verpackungsbehälters 1 vor Zerstörung sicher gesichert. Die Herstellung des Verpackungsbehälters 1 ist sehr einfach, da man lediglich die Päckchen 30 mit den Papierhandtüchern 31 zwischen der Innenverpackung 5 und der Außerverpackung 3 anordnet. Um ein Verrutschen der Päckchen 30 zu verhindern, genügen punktförmige Klebestellen 35, 37. Auch diese sind einfach anzubringen.

Eine Zerstörung des Packgutes 15 wird also mit einfachsten Mitteln sicher verhindert, da die Päckchen 30 mit den Papierhandtüchern 31 die Stöße z. B. bei einem Sturz des Verpackungsbehälters 1 sicher abfangen. Außerdem weist der Verpackungsbehälter 1 nur für ein Recyclingverfahren geeignete Materialien auf.

Im Rahmen der Erfindung kann die Innenverpackung 5 auch aus Wellpappe bestehen, mit deren glatter Außenoberfläche die Päckchen (3) fest verbunden sind.

## Patentansprüche

1. Verpackungsbehälter zur Aufnahme eines stoßempfindlichen oder leicht zerstörbaren Packgutes, mit einer Innenverpackung zur Aufnahme des Packgutes und einer Außenverpackung, wobei zwischen der Innenverpackung und der Außenverpackung allseitig angeordnete Zwischenräume ganz oder teilweise zur Anordnung mit Polsterschichten ausgefüllt sind, **dadurch gekennzeichnet,** daß die die Zwischenräume (21, 23, 25, 27 ) zwischen den aus Pappe bestehenden Innenverpackungen (5) und Außenverpackungen (3) ausfüllenden Polsterschichten (29) aus Papiervlies bestehen, das aus einem wiederverwertbaren und umweltfreundlichen Material hergestellt ist.

2. Verpackungsbehälter nach Anspruch 1, **dadurch gekennzeichnet,** daß die aus Papiervlies bestehenden Polsterschichten (29) einzelne Päckchen (30) aus gestapelten und gefalteten Papierhandtüchern (31) sind.

3. Verpackungsbehälter nach Anspruch 2, **dadurch gekennzeichnet,** daß die gestapelten Papierhandtücher (31) der einzelnen Päckchen (30) durch ein Umschlagpapier (33) zusammengehalten werden, welches mit der Innenverpackung (5) durch Klebung, Heftung oder dergleichen fest verbunden ist.

4. Verpackungsbehälter nach Anspruch 3, **dadurch gekennzeichnet,** daß das Umschlagpapier (33) mittels punktförmiger Klebestellen (35, 37 ) mit der Innenverpackung (5) gegen Verrutschen arretierbar ist.

5. Verpackungsbehälter nach einem der vorhergehenden Ansprüche, **dadurch gekennzeichnet,** daß die Innenverpackung (5) aus Wellpappe besteht, mit deren glatter Außenoberfläche die Päckchen (3) fest verbunden sind.